# FASCICULE DE BREVET EUROPEEN

(11) **EP 1 142 468 B1**
(45) Date de publication et mention de la délivrance du brevet: **03.08.2005**
(21) Numéro de dépôt: 01440088.1
(22) Date de dépôt: 27.03.2001
(51) Int. Cl.: A01D 78/10

(54) **Machine de fenaison**
Heuwerbungsmaschine
Haymaking machine

(30) Priorité: 04.04.2000 FR 0004250
(43) Date de publication de la demande: 10.10.2001
(73) Titulaire: KUHN S.A., 67706 Saverne Cedex (FR)
(72) Inventeur: Demanet, Didier, 57820 Saint-Louis (FR)
(74) Mandataire: Andres, Jean-Claude

(56) Documents cités:
- EP-A- 0 642 733
- EP-A- 0 954 956
- DE-A- 2 833 814
- DE-A- 3 835 366

## Description

La présente invention se rapporte à une machine de fenaison, notamment une andaineuse de végétaux couchés sur le sol, comportant une structure portant au moins une roue râteleuse qui est reliée à l'extrémité d'un bras porteur au moyen d'un premier axe et d'un deuxième axe, autour desquels elle peut pivoter et qui forment entre eux des angles d'environ 90°, lequel bras porteur est articulé avec un troisième axe sensiblement horizontal sur une poutre de ladite structure et est équipé d'un vérin hydraulique qui permet de le relever avec la roue râteleuse correspondante autour dudit troisième axe dans une position sensiblement verticale pour le transport et de l'abaisser pour le travail, laquelle roue râteleuse est munie de bras avec des outils de travail et peut être entraînée en rotation autour d'un axe support sensiblement vertical qui est muni à son extrémité inférieure de roues d'appui au sol.

Sur une machine de ce genre, connue dans le document EP-A-0 954 956, le premier axe d'articulation entre la roue râteleuse et son bras porteur est dirigé dans la direction d'avancement et le deuxième axe d'articulation est perpendiculaire à la direction d'avancement.

Ces axes d'articulation permettent à la roue râteleuse de pivoter par rapport au bras porteur pour suivre les dénivellations du sol durant le travail. La qualité du râtelage est ainsi considérablement améliorée.

Pour le transport, la roue râteleuse est relevée au moyen du bras porteur d'un angle d'environ 90°. Dans cette position elle est sensiblement verticale, ce qui permet de diminuer la largeur de l'ensemble et de la ramener en deçà de la largeur maximale autorisée pour les déplacements sur routes. Dans cette position, il est toutefois nécessaire de bloquer la roue râteleuse afin qu'elle ne puisse plus pivoter autour desdits axes d'articulation, notamment autour du deuxième axe qui est alors sensiblement vertical, lors des déplacements sur les chemins ou les routes. Par suite de tels pivotements, les outils de la roue râteleuse pourraient s'étendre au-delà de la largeur maximale autorisée et présenter un risque d'accrochage avec les objets ou les personnes qui pourraient se trouver à proximité.

Ces moyens de blocage augmentent le prix de la machine. En sus, s'ils sont mis en place ou enlevés manuellement par l'utilisateur, celui-ci peut omettre cette opération.

Le document DE-A-38 35 366 décrit des machines de fenaison avec des roues râteleuses qui sont reliées à un bâti par l'intermédiaire de dispositifs d'équilibrage devant permettre auxdites roues râteleuses de pivoter par rapport au bâti pour favoriser l'adaptation aux dénivellations du sol. A cet effet, ces dispositifs d'équilibrage déterminent des axes de pivotement géométriques situés près du sol.

Sur ces machines il n'est pas prévu de relever les rotors dans une position sensiblement verticale pour le transport. La largeur de ces machines ne peut pas être réduite de cette manière pour faciliter les déplacements.

La présente invention a pour but de remédier aux inconvénients précités des machines connues. Elle doit notamment permettre d'obtenir d'une manière très simple et à un moindre coût un blocage automatique de la roue râteleuse en position sensiblement verticale durant le transport.

A cet effet une importante caractéristique de l'invention consiste en ce que les deux axes d'articulation de la roue râteleuse avec le bras porteur forment des angles α et β dont les valeurs sont comprises entre environ 10° et 80°, avec la direction d'avancement de la machine à la fois en position abaissée pour le travail et en position relevée pour le transport. Il est important qu'aucun de ces axes ne forme un angle droit avec ladite direction d'avancement. Lesdits angles peuvent avantageusement avoir la même valeur c'est-à-dire 45°.

Grâce à cette position des deux axes d'articulation, la roue râteleuse s'immobilise automatiquement, sous l'effet de son propre poids, lorsqu'elle est soulevée en position de transport. De ce fait, il n'est plus nécessaire d'équiper la machine d'un dispositif de blocage de la roue râteleuse ni de moyens pour commander un tel dispositif lors de chaque transposition de la position de travail dans la position de transport ou vice versa. Le risque que le blocage de la roue râteleuse soit omis est également supprimé.

Selon d'autres caractéristiques de l'invention la roue râteleuse est articulée sur le premier axe au moyen de deux pattes qui lui permettent de pivoter autour dudit premier axe. Le deuxième axe est articulé dans des pattes de la structure porteuse de manière à pouvoir pivoter par rapport à ladite structure. Le premier axe est guidé à au moins une de ses extrémités dans un orifice oblong prévu dans une languette de la structure porteuse. Le deuxième axe est guidé à au moins une de ses extrémités dans un orifice oblong prévu dans une languette de la roue râteleuse. Ces orifices oblongs limitent d'une manière simple les angles de pivotement de la roue râteleuse autour des deux axes d'articulation afin d'éviter des déplacements trop importants qui pourraient nuire à la qualité du travail de râtelage et provoquer des détériorations.

D'autres caractéristiques et avantages de l'invention ressortiront de la description qui va suivre et qui se réfère aux dessins annexés qui représentent, à titre d'exemple non limitatif, une forme de réalisation de l'invention.

Dans ces dessins :
- la figure 1 représente une vue de dessus d'une machine selon l'invention en position de travail,
- la figure 2 représente, à plus grande échelle, une vue de derrière d'une roue râteleuse de la machine selon l'invention,
- la figure 3 représente schématiquement la liaison entre une roue râteleuse et son bras porteur.

Telle qu'elle est représentée sur les figures annexées, la machine selon l'invention comporte une structure porteuse (1). Celle-ci est notamment constituée par une poutre centrale (2) qui est sensiblement horizontale. Cette poutre (2) possède à son extrémité avant un dispositif d'accouplement (3) pour l'accrocher à un tracteur permettant de la déplacer dans une direction d'avancement (A). A son extrémité arrière elle possède deux poutrelles (4 et 5) divergentes ayant chacune une roue porteuse (6 et 7) qui roule sur le sol. Sur chaque côté de la poutre (2) est articulé, au moyen d'un axe (8, 9) sensiblement horizontal, un bras latéral (10, 11) qui porte une roue râteleuse (12, 13). La poutre (2) pourrait ne comporter qu'un seul bras latéral et une seule roue râteleuse. Elle pourrait également comporter, de chaque côté, deux bras latéraux avec des longueurs différentes et portant chacun une roue râteleuse. Dans ce cas, la machine comporterait quatre roues râteleuses qui lui permettraient d'atteindre une largeur de travail plus importante.

Les roues râteleuses (12 et 13) sont sensiblement identiques. Chacune comporte un carter (14) dans lequel est fixé un axe support (15) sensiblement vertical. Sous ce carter (14) est disposé un boîtier (16) avec des bras (17) qui s'étendent vers l'extérieur et qui sont équipés d'outils de travail (18) tels que des fourches. Ce boîtier (16) est monté sur l'axe support (15) de manière à pouvoir tourner sur celui-ci. Les bras porte-outils (17) sont guidés dans des paliers solidaires du boîtier (16) de sorte qu'ils puissent pivoter autour de leurs axes géométriques longitudinaux respectifs. A l'intérieur de ce boîtier (16) est prévue une came de commande fixée sur l'axe support (15). Chaque bras porte-outils (17) comporte à son extrémité située dans le boîtier (16) un levier avec un galet qui est guidé dans ladite came. Des roues râteleuses avec des outils de travail non commandés pourraient également équiper la machine selon l'invention.

Dans le carter (14) de chaque roue râteleuse (12, 13) sont prévus des moyens pour entraîner le boîtier (16) en rotation autour de l'axe support (15). Ces moyens sont constitués par une couronne dentée qui est solidaire de la partie supérieure du boîtier (16) et un pignon d'entraînement qui engrène avec ladite couronne. Ce pignon est lié à un arbre (19) qui s'étend hors du carter (14) en direction de la poutre (2). Sur cet arbre (19) est branché un arbre de transmission (20) avec un joint de cardan près de chacune de ses extrémités. Cet arbre de transmission (20) est relié à un carter de distribution (21) qui est fixé sous la poutre (2) et qui est relié par d'autres arbres de transmission à l'arbre de prise de force du tracteur. L'entraînement en rotation du boîtier (16) de chaque roue râteleuse (12, 13) pourrait également être effectué avec des moteurs hydrauliques.

Le bras porteur (10, 11) de chaque roue râteleuse (12, 13) est équipé d'un vérin hydraulique (22, 23) qui permet de le relever dans une position sensiblement verticale autour de son axe d'articulation (8, 9). Chaque vérin hydraulique (22, 23) est articulé avec une de ses extrémités sur la poutre (2) et avec son autre extrémité sur le bras (10, 11) correspondant.

L'axe support (15) de chaque roue râteleuse (12, 13) est muni à son extrémité inférieure d'une traverse (24) avec trois roues (25, 26, 27) d'appui au sol. Une roue (25) se situe à l'avant de l'axe support (15) tandis que deux roues (26 et 27) se situent derrière ledit axe support (15). Elles se trouvent en sus près des outils de travail (18) de manière à bien leur faire épouser la surface du sol.

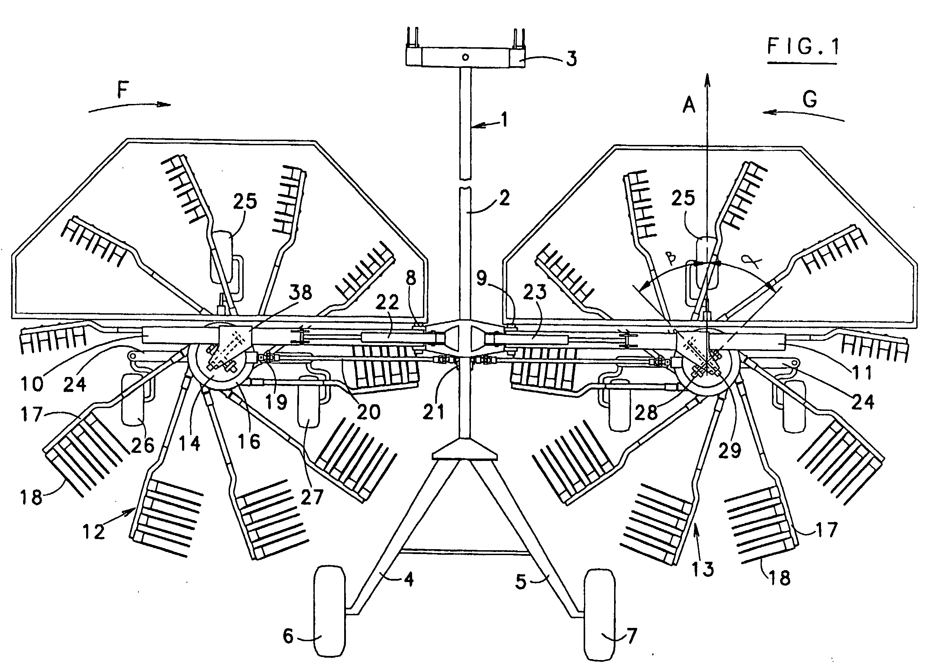

Le carter (14) de chaque roue râteleuse (12, 13) est articulé par rapport au bras porteur (10, 11) correspondant au moyen d'un premier axe (28) et d'un deuxième axe (29) qui forment entre eux des angles d'environ 90°. Ces deux axes (28 et 29) forment par ailleurs des angles α et β dont les valeurs peuvent être comprises entre environ 10° et 80° avec la direction d'avancement (A) de la machine (voir figure 1). Comme dans l'exemple représenté, les valeurs des angles α et β sont avantageusement d'environ 45°. Ces deux axes (28 et 29) se croisent et sont reliés entre eux de manière à former un croisillon. Ils peuvent cependant aussi être décalés en hauteur l'un par rapport à l'autre et être reliés entre eux.

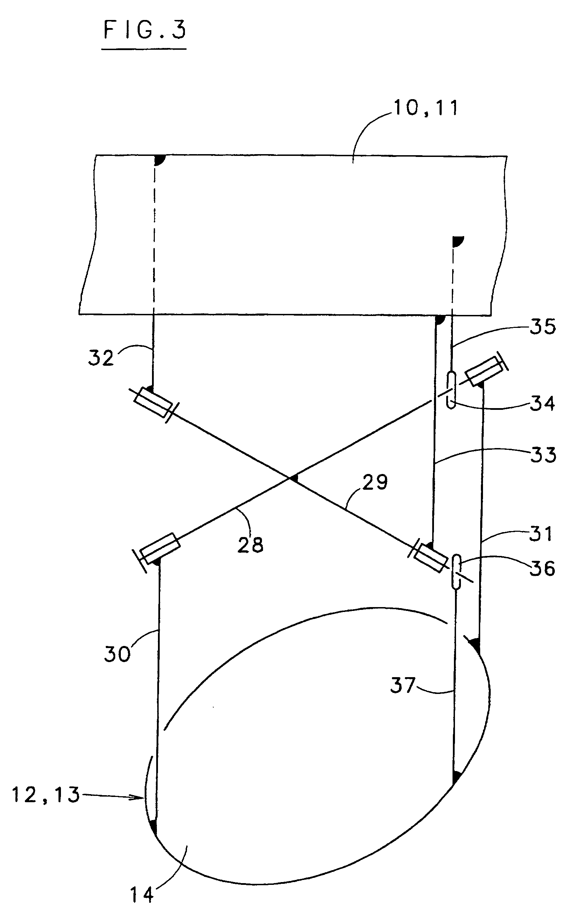

Comme cela ressort notamment de la figure 3, le carter (14) de chaque roue râteleuse (12, 13) comporte des pattes (30 et 31) qui sont dirigées vers le haut et qui sont articulées sur le premier axe (28). Le deuxième axe (29) est articulé sur le bras (10, 11) de la structure porteuse (1) au moyen de pattes (32, 33) qui sont liées audit bras (10, 11) et qui sont dirigées vers le bas. Les pivotements de chaque roue râteleuse (12, 13) par rapport à son bras porteur (10, 11) en position de travail sont limités. A cet effet, le premier axe (28) est guidé à au moins une de ses extrémités dans un orifice oblong (34) prévu dans une languette (35) solidaire du bras porteur (10, 11). La longueur de cet orifice (34) détermine l'angle de pivotement de la roue râteleuse (12, 13) autour du deuxième axe (29). Ledit deuxième axe (29) est également guidé à au moins une de ses extrémités dans un deuxième orifice oblong (36) prévu dans une languette (37) solidaire du carter (14) de la roue râteleuse (12, 13). La longueur de ce deuxième orifice (36) détermine l'angle de pivotement de la roue râteleuse (12, 13) autour du premier axe (28).

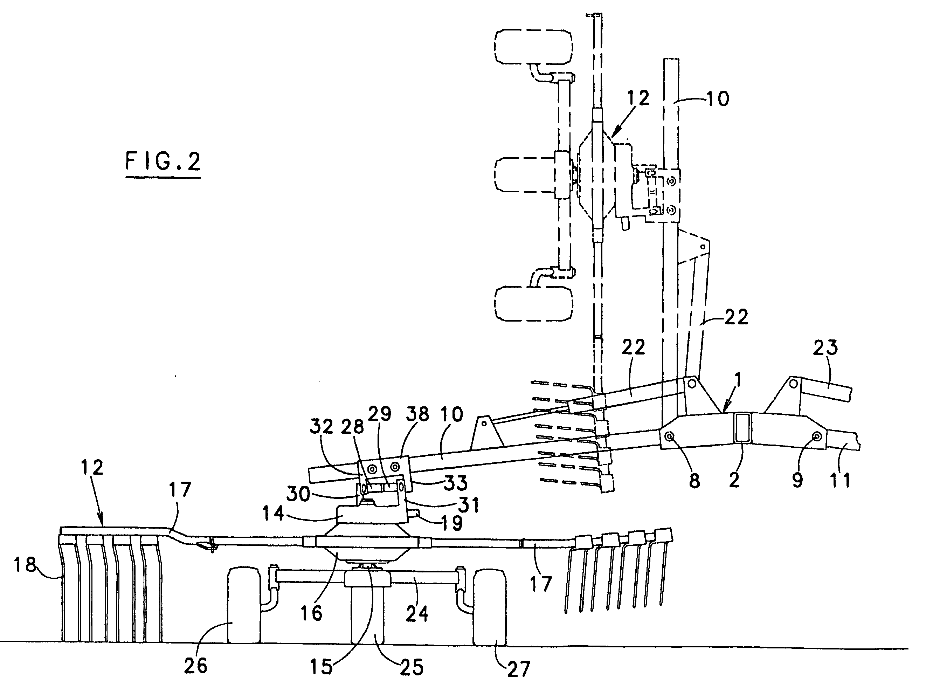

Comme cela ressort des figures 1 et 2, chaque roue râteleuse (12, 13) peut être reliée à un cadre (38) déplaçable sur le bras porteur (10, 11) correspondant. Ce cadre (38) est agencé de manière à pouvoir glisser sur son bras porteur (10, 11) et à pouvoir être immobilisé au moyen de vis par exemple, dans différentes positions. Dans cette réalisation les pattes d'articulation (32 et 33) du deuxième axe (29) et de la languette de guidage (35) du premier axe (28) sont solidaires dudit cadre (38). Ce montage permet de faire varier l'écartement entre les deux roues râteleuses (12 et 13) pour notamment adapter la largeur et le volume de l'andain à la machine de récolte qui doit le ramasser.

Au travail, la machine selon l'invention est attelée à un tracteur qui la déplace dans le sens de la flèche (A). Les deux bras porteurs (10 et 11) sont alors abaissés de sorte que les roues (25, 26 et 27) des deux roues râteleuses (12 et 13) reposent sur le sol. Les boîtiers (16) des ces roues râteleuses (12 et 13) sont entraînés en rotation dans le sens des flèches (F et G) à partir de l'arbre de prise de force du tracteur. Durant cette rotation, les bras porte-outils (17) de chaque roue râteleuse (12, 13) sont commandés par la came qui est logée dans le boîtier (16) correspondant de telle sorte que leurs outils (18) soient près du sol et râtellent les végétaux sur la partie avant de leur trajectoire. Ensuite, ils s'éloignent du sol et déposent ces végétaux sous la forme d'un andain sur la bande de terrain qui se situe entre les deux roues râteleuses (12 et 13). La largeur de cet andain peut être réglée en déplaçant les cadres (38) avec les roues râteleuses (12 et 13) le long des bras porteurs (10 et 11).

Lorsque la machine travaille sur un terrain avec des obstacles et qu'une roue d'appui (25, 26 ou 27) rencontre une bosse, elle fait pivoter la roue râteleuse (12, 13) correspondante autour du premier axe (28) et/ou du deuxième axe (29). Ces axes (28 et 29) procurent ainsi une grande mobilité à la roue râteleuse (12, 13) par rapport à son bras porteur (10, 11). Cette mobilité évite que les outils (18) grattent le sol ou qu'ils en soient trop éloignés par moments. Ainsi, ces outils (18) restent constamment proche du sol dans la zone de râtelage et ramassent correctement la totalité des végétaux. Lesdits pivotements sont toutefois limités par l'extrémité du premier axe (28) ou du deuxième axe (29) arrivant en butée dans l'extrémité de l'orifice oblong (34 ou 36) correspondant. Cette limitation permet d'éviter des débattements trop importants qui pourraient provoquer une collision entre les bras porte-outils (17) et la structure porteuse (1).

Pour le transport, l'entraînement en rotation des roues râteleuses (12 et 13) est arrêté et les deux bras porteurs (10 et 11) sont relevés autour des axes (8 et 9) dans une position sensiblement verticale au moyen des vérins hydrauliques (22 et 23) (position représentée en traits mixtes sur la figure 2). Dans cette position le premier axe (28) et le deuxième axe (29) de chaque roue râteleuse (12 et 13) forment des angles d'environ 45° par rapport à l'horizontal. En raison du poids des roues râteleuses (12 et 13) lesdits premiers et deuxièmes axes (28 et 29) se mettent automatiquement en butée dans les extrémités des orifices oblongs (34 et 36). Ils empêchent alors les roues râteleuses (12 et 13) de pivoter par rapport à leurs bras porteurs (10 et 11). De ce fait, il n'y a plus de risque que ces roues râteleuses (12 et 13) dépassent par moments de l'encombrement général de la machine. Lesdites roues râteleuses (12 et 13) retrouvent automatiquement leur mobilité autour des axes (28 et 29) lors du retour en position de travail.

Il est bien évident que l'invention n'est pas limitée au mode de réalisation décrit ci-dessus et représenté sur les dessins annexés. Des modifications sont possibles, notamment en ce qui concerne la constitution ou le nombre des divers éléments ou par substitution d'équivalents techniques, sans pour autant sortir du domaine de protection tel qu'il est défini dans les revendications.

## Revendications

1. Machine de fenaison, notamment une andaineuse de végétaux couchés sur le sol, comportant une structure (1) portant au moins une roue râteleuse (12, 13) qui est reliée à l'extrémité d'un bras porteur (10, 11) au moyen d'un premier axe (28) et d'un deuxième axe (29) autour desquels elle peut pivoter et qui forment entre eux des angles d'environ 90°, lequel bras porteur (10, 11) est articulé avec un troisième axe (8, 9) sensiblement horizontal sur une poutre (2) de ladite structure (1) et est équipé d'un vérin hydraulique (22, 23) qui permet de le relever avec la roue râteleuse (12, 13) correspondante autour dudit troisième axe (8, 9) dans une position sensiblement verticale pour le transport et de l'abaisser pour le travail, laquelle roue râteleuse (12, 13) est munie de bras (17) avec des outils de travail (18) et peut être entraînée en rotation autour d'un axe support (15) sensiblement vertical qui est muni à son extrémité inférieure de roues (25, 26, 27) d'appui au sol, ***caractérisée par le fait* que** les deux axes d'articulation (28 et 29) de la roue râteleuse (12, 13) avec le bras porteur (10, 11) forment des angles α et β dont les valeurs sont comprises entre environ 10° et 80°, avec la direction d'avancement (A) de la machine à la fois en position abaissée pour le travail et en position relevée pour le transport.

2. Machine de fenaison selon la revendication 1, ***caractérisée par le fait* que** les valeurs des angles (α et β) que forment les axes d'articulation (28 et 29) avec la direction d'avancement (A) sont d'environ 45°.

3. Machine selon la revendication 1 ou 2, ***caractérisée par le fait* que** les deux axes d'articulation (28 et 29) sont reliés entre eux et forment un croisillon.

4. Machine selon la revendication 1, 2 ou 3, ***caractérisée par le fait* que** la roue râteleuse (12, 13) est articulée sur le premier axe (28) au moyen de deux pattes (30 et 31) qui sont liées au carter (14) de ladite roue râteleuse (12, 13).

5. Machine selon l'une quelconque des revendications 1 à 4, ***caractérisée par le fait* que** le deuxième axe (29) est articulée sur la structure porteuse (1) au moyen de pattes (32 et 33) qui sont liées au bras (10, 11) de ladite structure (1).

6. Machine selon la revendication 4, ***caractérisée par le fait* que** le premier axe (28) est guidé à au moins une de ses extrémités dans un orifice oblong (34) prévu dans une languette (35) de la structure porteuse (1).

7. Machine selon la revendication 5, ***caractérisée par le fait* que** le deuxième axe (29) est guidé à au moins une de ses extrémités dans un orifice oblong (36) prévu dans une languette (37) de la roue râteleuse (12, 13).

8. Machine selon la revendication 5 ou 6, ***caractérisée par le fait* que** les pattes d'articulation (32 et 33) du deuxième axe (29) et la languette de guidage (35) du premier axe d'articulation (28) sont solidaires d'un cadre (38) déplaçable sur le bras (10, 11) de la structure porteuse (1).

## Patentansprüche

1. Heuwerbungsmaschine, insbesondere Schwader für auf dem Boden liegende Pflanzen, die eine Struktur (1) umfasst, die mindestens ein Rechrad (12, 13) umfasst, das mit dem Ende eines Tragarms (10, 11) mittels einer ersten Achse (28) und einer zweiten Achse (29), um die es schwenken kann verbunden ist, die miteinander Winkel von ungefähr 90° bilden, wobei der Tragarm (10, 11) mit einer dritten im Wesentlichen horizontalen Achse (8, 9) auf einem Träger (2) der Struktur (1) angelenkt und mit einem Hydraulikzylinder (22, 23) ausgestattet ist, der es ermöglicht, ihn mit dem entsprechenden Rechrad (12, 13) um die dritte Achse (8, 9) in eine im Wesentlichen vertikale Position für den Transport hochzuheben und für die Arbeit abzusenken, wobei das Rechrad (12,13) mit Armen (17) mit Arbeitswerkzeugen (18) versehen ist und in Drehung um eine im Wesentlichen vertikale Stützachse (15) angetrieben werden kann, die an ihrem unteren Ende mit Rädern (25, 26, 27) zur Abstützung am Boden versehen ist, ***dadurch gekennzeichnet,* dass** die beiden Gelenkachsen (28 und 29) des Rechrades (12, 13) mit dem Tragarm (10, 11) Winkel α und β, deren Werte zwischen ungefähr 10° und 80° liegen, mit der Vorschubrichtung (A) der Maschine sowohl in der für die Arbeit abgesenkten Position als auch in der für den Transport hochgehobenen Position bilden.

2. Heuwerbungsmaschine nach Anspruch 1, ***dadurch gekennzeichnet,* dass** die Werte der Winkel (α und β), die die Gelenkachsen (28 und 29) mit der Vorschubrichtung (A) bilden, ungefähr 45° betragen.

3. Maschine nach Anspruch 1 oder 2, ***dadurch gekennzeichnet,* dass** die beiden Gelenkachsen (28 und 29) miteinander verbunden sind und ein Armkreuz bilden.

4. Maschine nach Anspruch 1, 2 oder 3, ***dadurch gekennzeichnet,* dass** das Rechrad (12, 13) auf der ersten Achse (28) mittels zweier Befestigungseisen (30 und 31) angelenkt ist, die mit dem Kasten (14) des Rechrades (12, 13) verbunden sind.

5. Maschine nach irgend einem der Ansprüche 1 bis 4, ***dadurch gekennzeichnet,* dass** die zweite Achse (29) auf der Tragstruktur (1) mittels Befestigungseisen (32 und 33) angelenkt ist, die mit dem Arm (10, 11) der Struktur (1) verbunden sind.

6. Maschine nach Anspruch 4, ***dadurch gekennzeichnet,* dass** die erste Achse (28) an mindestens einem ihrer Enden in einer Langöffnung (34) geführt wird, die in einer Zunge (35) der Tragstruktur (1) vorgesehen ist.

7. Maschine nach Anspruch 5, ***dadurch gekennzeichnet,* dass** die zweite Achse (29) an mindestens einem ihrer Enden in einer Langöffnung (36) geführt wird, die in einer Zunge (37) des Rechrades (12, 13) vorgesehen ist.

8. Maschine nach Anspruch 5 oder 6, ***dadurch gekennzeichnet,* dass** die Befestigungseisen (32 und 33) zur gelenkigen Anordnung der zweiten Achse (29) und die Führungszunge (35) der ersten Gelenkachse (28) mit einem auf dem Arm (10, 11) der Tragstruktur (1) verschiebbaren Rahmen fest verbunden sind.

## Claims

1. Haymaking machine, particularly a windrower for plant matter lying on the ground, comprising a structure (1) carrying at least one raking wheel (12, 13) which is connected to the end of a carrying arm (10, 11) by means of a first axis (28) and a second axis (29) about which it is able to pivot and which form angles of about 90° with one another, which carrying arm (10, 11) is articulated to an approximately horizontal third axis (8, 9) on a beam (2) of the said structure (1) and is equipped with a hydraulic ram (22, 23) which makes it possible to raise it with the corresponding raking wheel (12, 13) about the said third axis (8, 9) in an approximately vertical position for transport and to lower it for work, which raking wheel (12, 13) is equipped with arms (17) with working tools (18) and can be driven in rotation about an approximately vertical support axis (15) which is equipped at its lower end with support wheels (25, 26, 27), ***characterized in* that** the two axes of articulation (28 and 29) of the raking wheel (12, 13) to the carrying arm (10, 11) form angles α and β, the values of which are between about 10° and 80°, with the direction of forward travel (A) of the machine at the same time in the lowered position for work and in the raised position for transport.

2. Haymaking machine as claimed in claim 1, ***characterized in* that** the values of the angles (α and β) that the articulation axes (28 and 29) form with the direction of forward travel (A) are about 45°.

3. Machine as claimed in claim 1 or 2, ***characterized in* that** the two articulation axes (28 and 29) are connected together and form a crosspiece.

4. Machine as claimed in claim 1, 2 or 3, ***characterized in* that** the raking wheel (12, 13) is articulated to the first axis (28) by means of two cramps (30 and 31) which are connected to the casing (14) of the said raking wheel (12, 13).

5. Machine as claimed in anyone of claims 1 to 4, ***characterized in* that** the second axis (29) is articulated to the carrying structure (1) by means of cramps (32 and 33) which are connected to the arm (10, 11) of the said structure (1).

6. Machine as claimed in claim 4, ***characterized in* that** the first axis (28) is guided at least at one of its ends in an oblong orifice (34) made in a tab (35) of the carrying structure (1).

7. Machine as claimed in claim 5, ***characterized in* that** the second axis (29) is guided at least at one of its ends in an oblong orifice (36) made in a tab (37) of the raking wheel (12, 13).

8. Machine as claimed in claim 5 or 6, ***characterized in* that** the articulation cramps (32 and 33) of the second axis (29) and the guide tab (35) for the first articulation axis (28) are secured to a frame (38) that can be moved along the arm (10, 11) of the carrying structure (1).
